**Europäisches Patentamt**

**European Patent Office**

**Office européen des brevets**

(19)

(11) Veröffentlichungsnummer: **0 257 617**
**A2**

(12) ## EUROPÄISCHE PATENTANMELDUNG

(21) Anmeldenummer: **87112303.0**

(22) Anmeldetag: **25.08.87**

(51) Int. Cl.⁴: **G01M 13/00**

(30) Priorität: **27.08.86 DE 3629038**

(43) Veröffentlichungstag der Anmeldung:
**02.03.88 Patentblatt 88/09**

(84) Benannte Vertragsstaaten:
**DE FR GB IT NL SE**

(71) Anmelder: **Kaco GmbH + Co.**
**Rosenbergstrasse 22**
**D-7100 Heilbronn(DE)**

(72) Erfinder: **Bahnmüller, Lutz, Dipl.-Ing. (FH)**
**Stockstrasse 13/1**
**D-7101 Oedheim/Degmarn(DE)**
Erfinder: **Kinast, Peter, Dipl.-Ing.**
**Gartenstrasse 12**
**D-7259 Friolzheim(DE)**
Erfinder: **Steinbrück, Peter, Dipl.-Ing.**
**Auf der Altenbrug 33**
**D-7000 Stuttgart 50(DE)**

(74) Vertreter: **Jackisch, Walter, Dipl.-Ing. et al**
**Menzelstrasse 40**
**D-7000 Stuttgart 1(DE)**

(54) **Prüfgerät und Verfahren zum Prüfen der Dichtkante einer Dichtlippe einer Dichtung.**

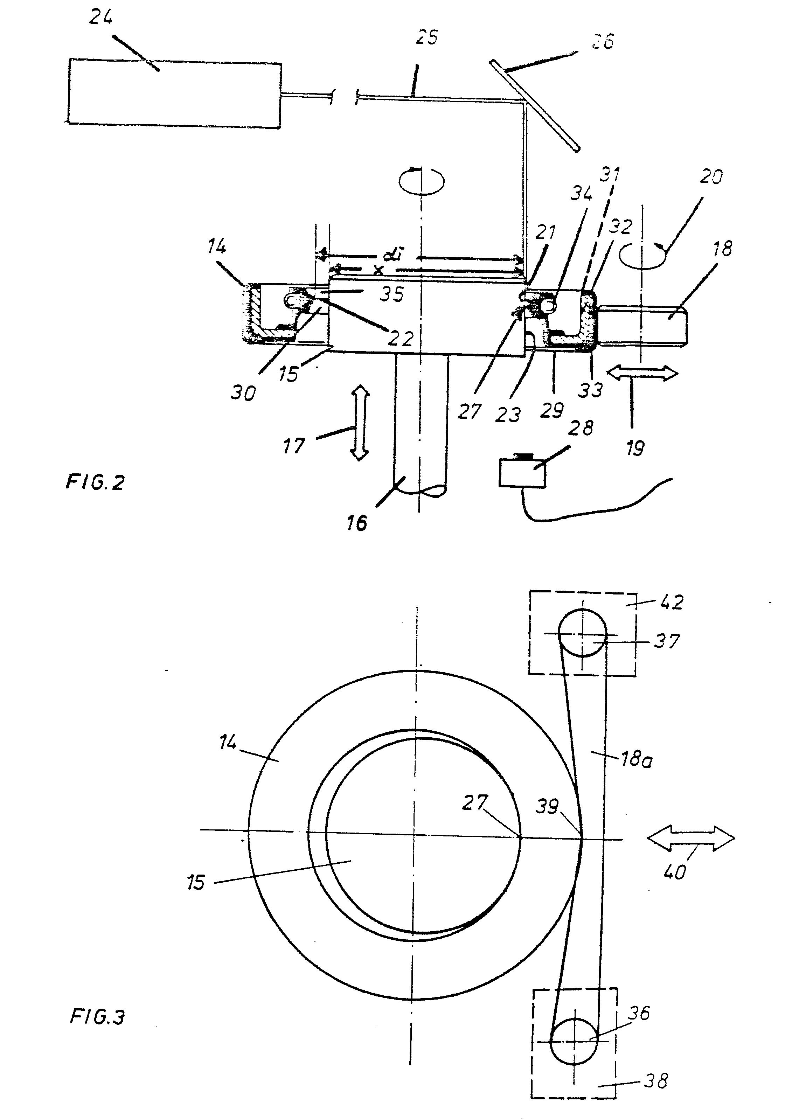

(57) Mit dem Prüfgerät wird eine Dichtkante einer Dichtlippe einer Dichtung auf Fehlerfreiheit geprüft. Hierzu wird die Dichtung mit einer Dichtkante (22) an einen Prüfdorn (15) angelegt, wobei ein von einer Lichtquelle (24) ausgesandter Lichtstrahl (25) auf die Dichtkante (22) fällt. Als Lichtquelle (24) wird ein Lasergerät verwendet. Der Prüfdorn (15) wird um seine Achse gedreht und die Dichtkante (22) von dem Laserstrahl (25) abgetastet. Die Dichtlippe (30) wird während der Drehung der Dichtung (14) nur mit einem Teil ihres Umfangs mit definierter Kraft gegen den Prüfdorn (15) gedrückt. Der vom Lasergerät ausgehende äußerst eng gebündelte Lichtstrahl (25) trifft punktförmig auf die Dichtkante (22), wodurch sie sehr genau abgetastet werden kann. Dadurch ist es möglich auf einfache Weise sogar kleine Fehler einwandfrei festzustellen und aufzuzeichnen. (Fig. 2)

FIG 2

EP 0 257 617 A2

## Prüfgerät und Verfahren zum Prüfen der Dichtkante einer Dichtlippe einer Dichtung

Die Erfindung betrifft ein Prüfgerät für eine Dichtung nach dem Oberbegriff des Anspruches I und ein Verfahren zum Prüfen der Dichtkante einer Dichtlippe einer Dichtung nach dem Oberbegriff des Anspruches I0.

Bekannte Geräte dieser Art arbeiten mit einer Lichtspaltkontrolle der Dichtungen, wobei als Lichtquelle eine Glühlampe verwendet wird. Zur Prüfung wird die Dichtung auf den Prüfdorn aufgezogen, wobei die Dichtlippe über ihren gesamten Umfang elastisch verformt wird. Der Durchmesser des Prüfdornes ist so ausgelegt, daß die Dichtlippe nur im gewünschten Maße verformt wird. Das Licht der Lichtquelle fällt auf den Anlagebereich der Dichtkante auf dem Prüfdorn. Ist die Dichtkante fehlerfrei, tritt zwischen Dichtkante und Prüfdorn kein Licht hindurch. Über einen Aufnehmer wird das bei fehlerhafter Dichtkante hindurchtretende Licht aufgezeichnet, und die Aufzeichnung wird dann ausgewertet. Da die Gummiteile der Dichtung bei der Herstellung Schwankungen im Schwindmaß unterliegen, fallen die Innendurchmesser der Dichtkanten unterschiedlich aus. Es sind daher Prüfdorne unterschiedlichen Durchmessers oder ein konischer Prüfdorn erforderlich, um eine gleichmäßige Anlage der Dichtkante am Prüfdorn mit der vorgegebenen Verformung zu erreichen. Die konischen Prüfdorne sind aufwendig in der Herstellung. Eine Vorratshaltung verschiedener Prüfdorne ist teuer.

Ein weiterer Nachteil der bekannten Prüfgeräte besteht darin, daß das einfallende Licht ziemlich diffus ist und daher zu einer relativ hohen Lichtstreuung führt. Fehler in der Dichtkante können daher oft nicht exakt abgebildet und aufgezeichnet werden, insbesondere wenn sie klein sind. Auch lassen sich längs der Dichtkante verlaufende Fehlstellen, die einen sanften Konturenverlauf haben, häufig nicht erkennen. Außerdem kommt es auch - schon zu Ungenauigkeiten in der Auswertung durch Fremdlichteinwirkung, beispielsweise durch das Tageslicht, so daß die Auswertegenauigkeit von der Umgebungshelligkeit während der Prüfung abhängt.

Der Erfindung liegt die Aufgabe zugrunde, das Prüfgerät der gattungsbildenden Art so auszubilden und ein Verfahren anzugeben, bei dem auf einfache Weise auch kleine Fehler in der Dichtkante des Dichtung festgestellt und Fehlstellen möglichst genau abgebildet werden können.

Diese Aufgabe wird bei einem Prüfgerät der gattungsbildenden Art erfindungsgemäß mit den kennzeichnenden Merkmalen des Anspruches I und bei einem Verfahren insbesondere unter Anwendung des Gerätes erfindungsgemäß mit den kennzeichnenden Merkmalen des Anspruches I0 gelöst.

Da das Lasergerät kein diffuses Licht ausstrahlt, sondern einen äußerst eng gebündelten Strahl bildet, der punktförmig auf die Dichtkante trifft, kann die Dichtkante bzw. der jeweilige Dichtkantenabschnitt der Dichtung sehr genau abgetastet werden. Es ist somit möglich, auf einfache Weise sogar sehr kleine Fehler, die infolge der diffusen Lichtstreuung mit den herkömmlichen Geräten nicht mehr erfaßt werden können, einwandfrei festzustellen und ggf. aufzuzeichnen bzw. auszuwerten. Durch die Anwendung eines Lasergerätes mit stark gebündeltem Laserstrahl und eines Prüfdornes mit allenfalls leicht konischer Form kann auf einfache Weise erreicht werden, daß die Dichtkantenqualität der Dichtungen sogleich nach dem Preßvorgang bzw. der Vulkanisation der Dichtung ermittelt werden kann. Die geprüften Dichtungen werden vorzugsweise mit einer Auswerteelektronik ausgewertet und sortiert.

Vorteilhaft ist der Durchmesser des Prüfdornes kleiner als die lichte Weite der Dichtung im Bereich der Dichtkante, wobei ein Dichtkantenabschnitt mit einer definierten Anpreßkraft an den Prüfdorn angedrückt wird. Die Dichtlippe wird beim erfindungsgemäßen Verfahren nicht über ihren gesamten Umfang gleichzeitig zur Anlage am Prüfdorn gebracht, sondern nur über einen Teil ihres Umfanges. Dadurch ist es in vorteilhafter Weise möglich, die Dichtung sofort nach ihrer Vulkanisation zu prüfen, so daß schon wesentlich früher als bislang eine Aussage über die Dichtkantenqualität möglich ist und bei etwaigen Fehlern die Fertigungsbedingungen schon frühzeitig geändert werden können. Durch die definierte Anpreßkraft des Dichtkantenabschnittes an den Prüfdorn kann die zulässige Fehlergröße einfach eingestellt werden. Bei geringem Anpreßdruck wird die Dichtlippe weniger stark verformt, so daß kleinere Fehler noch erkannt werden können. Bei höherem Anpreßdruck werden diese kleineren Fehlstellen durch elastische Verformung ausgeglichen, so daß sie nicht mehr festgestellt werden. Somit kann durch Einstellung des Anpreßdruckes sehr einfach die Größe der noch zu erkennenden Fehler in der Dichtkante bzw. die zulässige Toleranz eingestellt werden. Wegen der Anpressung kann auch ohne einen bei Dichtungen im allgemeinen verwendeten Federring geprüft werden, da die Federeinzugskraft infolge der definierten Anpressung außer Acht gelassen werden kann.

Durch elektronische Speicherung der Fehler für jede spezielle Dichtung kann der Prüfprozeß vollautomatisch durchgeführt werden, so daß die Prüfung ohne menschliche Kontrolle erfolgen kann.

Weitere Merkmale der Erfindung ergeben sich aus den weiteren Ansprüchen, der Beschreibung und den Zeichnungen.

Die Erfindung wird nachstehend anhand eines in den Zeichnungen dargestellten Ausführungsbeispieles näher beschrieben. Es zeigt:

Fig. 1 ein erfindungsgemäßes Prüfgerät in perspektivischer Darstellung,

Fig. 2 einen Teil einer Prüfstation des Prüfgerätes nach Fig. 1 in schematischer Darstellung.

Fig. 3 eine abgewandelte Ausführungsform des Anpreßgliedes.

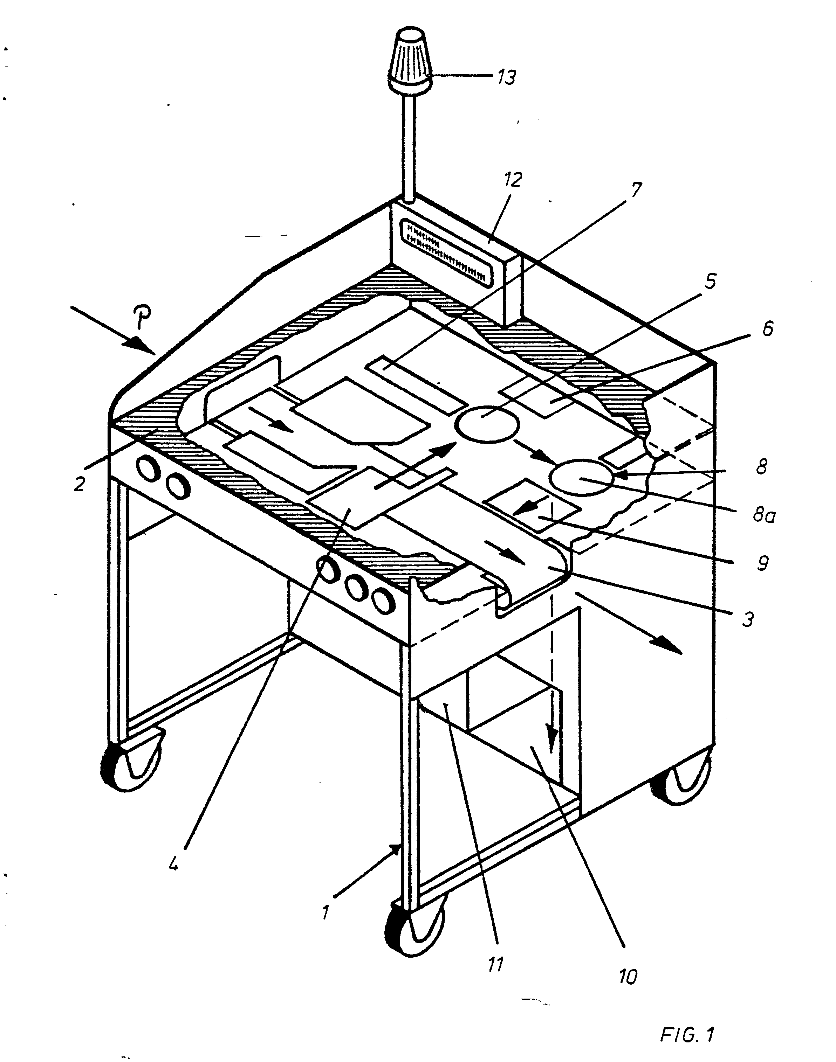

Das Prüfgerät nach den Fig. 1 und 2 weist einen Ständer 1 mit einer Arbeitsplatte 2 auf, unterhalb der ein Transportband 3 angeordnet ist, mit dem die zu prüfenden Dichtungen in Transportrichtung P zugeführt werden. Mit einer quer zum Transportband 3 und unterhalb der Arbeitsplatte 2 verfahrbaren Zuführeinrichtung 4, vorzugsweise einem Einstoßer, werden die auf dem Transportband ankommenden Dichtungen einer Kontroll-bzw. Sensierungs einrichtung 5 zugeleitet, in der die jeweilige Dichtung auf lagerichtigkeit überprüft wird. falsch liegende Dichtungen werden mit der Zuführeinrichtung 4 quer zur Transportrichtung P einer Selektiervorrichtung 6 zugeleitet und damit ausgeschieden, während richtig liegende Dichtungen parallel zur Transportrichtung P über eine weitere Zuführeinrichtung 7 zu einer Prüfstation 8 transportiert werden. In einer weiteren Selektiereinrichtung 9 werden die geprüften Dichtungen nach Impulsen einer (nicht dargestellten) Auswerteelektronik ausgesondert und hinter der Zuführeinrichtung 4 auf das Transportband 3 zurückgebracht. Mit ihm werden die über die Auswerteelektronik kontrollierten und ausgewählten Dichtungen aus dem Gerät weiter transportiert, während Ausschußdichtungen in einen im Ständer 1 unterhalb der Arbeitsplatte 2 angeordneten Behälter 10 fallen. Benachbart zu diesem Behälter ist ein weiterer Behälter 11 vorgesehen, in den die nicht lagerichtig angeordneten Dichtungen fallen.

Auf der Arbeitsplatte 2 ist eine Anzeige 12, vorzugsweise eine Klartextanzeige mit einer Störungsmeldeleuchte 13 angeordnet, mit denen das Gerät überwacht werden kann.

In der Prüfstation 8 ist eine Öffnung 8a vorgesehen, in der die zu prüfende, im Ausführungsbeispiel als Wellendichtring ausgebildete Dichtung 14 (Fig. 2) angeordnet wird. Der Wellendichtring 14 weist einen ringförmigen Stützkörper 32 mit einer Ummantelung 33 sowie einer Dichtlippe 30 auf, die durch eine Ringfeder 34 in Dichtstellung vorgespannt ist. Zur Aufnahme des Wellendichtringes ist ein Prüfdorn 15 vorhanden, der bei der Ausführungsform nach Fig. 2

durch eine Antriebswelle 16 während der Messung rotierend angtrieben wird. Der Prüfdorn 15 kann zum Ein-und Ausfahren aus dem Wellen dichtring 14 angehoben bzw. abgesenkt werden, wie durch den Pfeil 17 in Fig. 2 angegeben ist. Er ist zylindrisch, allenfalls leicht konisch ausgebildet. Sein Außendurchmesser x ist kleiner als die lichte Weite $d_i$ des Wellendichtringes 14 im Bereich der Dichtkante 22.

Etwa auf gleicher Höhe neben dem in seine Arbeitsstellung (Fig. 2) ausgefahrenen Prüfdorn 15 ist eine Anpreßrolle 18 vorgesehen, die achsparallel zum Prüfdorn 15 liegt und radial zum Wellendichtring zustellbar (Pfeil 19) sowie um ihre Achse frei drehbar ist (Pfeil 20), so daß sie gegensinnig zum Prüfdorn 15 auf der Außenmantelfläche des Dichtringes 14 abrollt.

Mit der Anpreßrolle 18 wird der Wellendichtring 14 während der Messung derart gegen den Prüfdorn 15 gepreßt, daß ein Abschnitt 21 der Dichtkante 22 mit vorgegebener Anpreßkraft gegen die Mantelfläche 23 des angetriebenen Prüfdornes 15 gedrückt wird, wodurch der Dichtring 14 mitgenommen und dementsprechend umlaufend angetrieben wird.

Im Bereich seitlich oberhalb des Prüfdornes 15 ist ein Lasergerät 24 angeordnet, das einen scharf gebündelten Laserstrahl 25 senkrecht zur Achse des Prüfdornes 15 aussendet. Der Laserstrahl 25 trifft auf einen Umlenkspiegel 26, der oberhalb der Anlagestelle des Dichtkantenabschnittes 21 am Prüfdorn 15 auf gleicher Höhe wie das Lasergerät 24 angeordnet ist. Am Umlenkspiegel 26 wird der Laserstrahl 25 senkrecht nach unten so umgelenkt, daß er genau auf die Anlagestelle 27 trifft und die Mantelfläche 23 des Prüfdornes 15 tangiert. Der umgelenkte Laserstrahl 25 verläuft somit parallel zur Achse des Prüfdornes 15 bzw. des zu prüfenden Wellendichtringes.

Mit Abstand unterhalb der Anlagestelle 27 ist ein Empfänger 28 angeordnet, der mit einer Auswerteelektronik verbunden ist.

Vor Erreichen der Prüfstation wurde der zu prüfende Wellendichtring 14 wie beschrieben auf dem Transportband 3 der Zuführeinrichtung zugeführt, dort zur Prüfung ausgewählt und zur Kontrolleinrichtung 5 transportiert. Dort wurde geprüft, ob der Wellendichtring mit seinem Boden 29 (Fig. 2) nach unten weist. Diese Lageprüfung ist vor allem notwendig bei Wellendichtringen mit einer Staublippe, die zusätzlich zur Dichtlippe vorgesehen ist. Ein durch eine Fehlstelle verursachter Spalt zwischen dem Prüfdorn und der Dichtkante 22 würde bei falscher Lage des Wellendichtringes durch die Staublippe so verdeckt, daß der durch den Spalt hindurchtretende Laserstrahl 25 nicht zum Empfänger 28 gelangen könnte. Das Gerät würde dann fälschlich den Wellendichtring als ordnungsgemäß ausweisen. Darum werden Wellendichtringe, die mit ihrer ringförmigen Stirnseite 3I nach unten, also in falscher Lage, zugeführt wurden, über die Selektiervorrichtung 6 in den Behälter II ausgesondert. Der lagerichtig zugeführte Wellendichtring I4 wurde mit der Zuführeinrichtung 7, die vorzugsweise ebenfalls als Einstoßer ausgebildet ist, zur Prüfstation 8 transportiert. Dort wird zunächst der Prüfdorn I5 von unten in den Dichtring I4 eingefahren und dann die Zuführeinrichtung 7 zurückgefahren. Da der Innendurchmesser $d_i$ des Wellendichtringes im Bereich der Dichtkante 27 größer ist als der Durchmesser x des Prüfdornes I5, läßt sich der Dorn einfach bis zur Prüfposition in den Wellendichtring schieben.

Dann wird die Anpreßrolle I8 in Richtung des Pfeiles I9 nach links bis in die in Fig. 2 dargestellte Lage zugestellt. Die Dichtlippe 30 wird dabei örtlich elastisch verformt und gegen den Prüfdorn I5 gedrückt. Infolge der nur örtlichen Verformung liegt die Dichtlippe 30 nur im Bereich der Anlagestelle 27 an der Außenfläche 23 des Prüfdornes I5 an, wobei infolge der Umlaufbewegung des Dichtringes I4 fortlaufend aufeinanderfolgende Abschnitte 2I der Dichtkante an die Anlagestelle 27 gelangen.

Der vom Umlenkspiegel 26 umgelenkte Laserstrahl 25 verläuft achsparallel zum Prüfdorn I5 zur Anlagestelle 27. Ist die Dichtkante 22 in Ordnung, kann der Laserstrahl 25 nicht zwischen ihr und der Mantelfläche 23 des Prüfdornes I5 hindurchtreten. Die Anlagestelle 27 wird wie beschrieben stetig in bezug auf die Dichtkante 22 verlagert, die also über ihren ganzen Umfang den örtlich festen Laserstrahl 25 passiert. Dabei rollen die Außenfläche des Dichtringes und die frei drehbare Anpreßrolle I8 aufeinander ab. Die Dichtlippe 30 wird im Anlagebereich 27 durch die Andrückrolle I8 elastisch ausgewölbt, so daß sie dort am Prüfdorn anliegt und zuverlässig auf Fehler abgetastet wird. An Fehlerstellen ist die dichte Anlage am Prüfdorn unterbrochen, und der Laserstrahl 25 tritt dann zwischen der Dichtkante 22 und dem Prüfdorn I5 hindurch und trifft auf den Empfänger 28, der im Strahlbereich des Laserstrahles liegt. Der Empfänger 28 gibt dann ein Signal an die Auswerteelektronik.

Die Anpreßrolle I8 wird mit einer definierten Kraft gegen den Wellendichtring I4 und damit den Prüfdorn I5 gedrückt, so daß durch Einstellen des Anpreßdruckes Fehler bestimmter Größe für die Prüfung eliminiert werden können. Zum Beispiel können auch sehr kleine Unebenheiten, Risse und dergleichen als Fehler festgestellt werden, wenn der Anpreßdruck gering ist. Die Dichtkante 22 wird dann weniger verformt, so daß kleinere Fehlerstellen, die bei stärkerem Anpreßdruck durch elastische Verformung verschwinden würden, nunmehr erfaßt werden können. Man kann daher durch Wahl des Anpreßdruckes Fehler zulassen, die noch innerhalb einer vorzugebenden Toleranz liegen. Da die zu prüfenden Dichtringe bzw. deren Dichtlippe unterschiedliche Materialeigenschaften haben und/oder unterschiedlich geometrisch gestaltet sein können, kann durch Einstellen des Anpreßdruckes diesen Gegebenheiten Rechnung getragen werden.

Durch den punktförmig auftreffenden Laserstrahl 25 und die segmentförmige Abtastung der Dichtkante 22 in dem an den Prüfdorn I5 angedrückten Abschnitt 27 können auch sogenannte verdeckte Fehler einwandfrei festgestellt werden. Bei verdeckten Fehlern handelt es sich um an der Dichtkante 22 entlang verlaufende Fehlerstellen, die unscharfe Konturen aufweisen. Infolge der extremen Bündelung des Laserstrahles 25 in Verbindung mit der Einstellmöglichkeit des Anpreßdruckes durch die Anpreßrolle I8 können auch derartige Fehler zuverlässig festgestellt werden.

Mit dem beschriebenen Gerät können Dichtringe auch sofort nach der Vulkanisation auf Dichtkantenfehler geprüft werden, wenn die Streuung im Durchmesser der Wellendichtringe noch sehr groß und das Endmaß noch nicht erreicht ist, das bei manchen Werkstoffen erst durch eine Nachbehandlung längerer Dauer von beispielsweise 24 Stunden vorhanden ist. Die sofortige Prüfung ist möglich, weil der Wellendichtring mit seiner Dichtkante nicht genau auf den Prüfdorn passen muß, die Dichtlippe vielmehr mit der Anpreßrolle I8 nur örtlich verformt wird und nur in diesem Anlagebereich geprüft wird, der durch die Drehbewegung des Dornes und des Dichtringes stetig über dessen Innenumfang verlagert wird. Infolge der durch die Anpreßrolle I8 erzeugten definierten Anpreßkraft muß auch die Ringfeder 34 bei der Prüfung nicht montiert sein. Da direkt nach dem Vulkanisieren des Wellendichtringes die Dichtkantenprüfung durchgeführt werden kann, können Fehler beim Vulkanisierprozeß frühzeitig erkannt und sofort für die nachfolgend hergestellten Wellendichtringe ausgeschaltet werden.

Vorteilhaft ist ferner, daß eine Fremdlichteinwirkung wegen der starken Bündelung des Laserstrahles vernachlässigbar ist, und daß der Prüfdorn zylindrisch sein kann oder nur eventuell leicht konisch ausgebildet sein muß, so daß er einfach hergestellt werden kann und auch das Prüfungsergebnis nicht beeinträchtigt wird. Schließlich kann es in bestimmten Fällen auch zweckmäßig sein, die Dichtkante 22 an dem dem angepreßten Abschnitt gegenüberliegenden Dichtkantenteil 35, der vom Prüfdorn I5 Abstand hat, zu überprüfen.

Fig. 3 zeigt in schematischer Darstellung eine abgewandelte Ausführungsform des Andrückgliedes, das in diesem Fall ein endloses Andrückband I8a ist und zugleich als Antriebsband für den zu prüfenden Dichtring I4 dient. Dabei ist

der Prüfdorn l5 frei drehbar gelagert. Das Andrückband l8a ist über zwei Umlenkrollen 36 und 37 geführt, von denen die Rolle 36 über einen Schrittschaltmotor 38 angetrieben wird, so daß das Band l8a und damit der Wellendichtring l4 - schrittweise bewegt wird. Die Umlenkrollen 36 und 37 sind so angeordnet, daß das dem Dichtring l4 zugewandte Trum des Bandes l8a an der Anlagestelle 39 von der Mantelfläche des Dichtringes ausgelenkt und dadurch gespannt wird. Der damit erzielte Anpreßdruck an der Anlagestelle 27 der Dichtkante am Prüfdorn (vgl. Fig. 2) kann durch Verstellen der Umlenkrolle 37 oder auch beider Umlenkrollen in Richtung des Doppelpfeiles 40 verändert werden. Der Umlenkrolle 37 ist ein Kraftaufnehmer 4l zugeordnet, über den der Anpreßdruck gemessen wird. Die Messung kann digital ausgeführt und der Meßwert auf einer Skala analog angezeigt werden.

Anstelle des beschriebenen Wellendichtringes können auch alle anderen Dichtungen mit Dichtlippe, z.B. Nutringe, Abstreifer, Kolbendichtungen, Ventilschaftdichungen u.a. mit dem Gerät geprüft werden.

**Ansprüche**

l. Prüfgerät für insbesondere ringförmige Dichtungen zum Prüfen der Dichtkante einer Dichtlippe auf Fehlerfreiheit, mit einem Prüfdorn, an den die Dichtkante anzulegen ist, und mit einer Lichtquelle, deren Lichtstrahl auf die Dichtkante gerichtet ist, dadurch gekennzeichnet, daß als Lichtquelle (24) ein Laser zur Erzeugung eines scharf gebündelten Lichtstrahles vorgesehen ist.

2. Gerät nach Anspruch l,
dadurch gekennzeichnet, daß der Durchmesser (x) des Prüfdornes (l5) kleiner ist als die lichte Weite (d$_i$) der Dichtung (l4) im Bereich der Dichtkante (22).

3. Gerät nach Anspruch l oder 2,
dadurch gekennzeichnet, daß der zu prüfende Dichtkantenabschnitt (2l) mit einem Andrückglied (l8; l8A), beispielsweise einer Anpreßrolle (l8) oder einem Andrückband (l8A), an den Prüfdorn (l5) andrückbar ist.

4. Gerät nach Anspruch 3,
dadurch gekennzeichnet, daß das Andrückglied (l8; l8A) zur Einstellung des Anpreßdruckes verstellbar ist.

5. Gerät nach einem der Ansprüche l bis 4,
dadurch gekennzeichnet, daß der Laserstrahl (25) durch einen Spiegel (26) zu dem angepreßten Dichtkantenabschnitt (2l) umgelenkt und - bezogen auf die Strahlrichtung - hinter der Anlagestelle (27) der Dichtkante (30) ein Empfänger (28) angeordnet ist, der mit einer Auswerteelektronik für den empfangenen Laserstrahl verbunden ist.

6. Gerät nach einem der Ansprüche l bis 5,
dadurch gekennzeichnet, daß die zu prüfende Dichtung angetrieben ist.

7. Gerät nach einem der Ansprüche 3 bis 6,
dadurch gekennzeichnet, daß das als Anpreßrolle (l8) ausgebildete Andrückglied und der Prüfdorn (l5) achsparallel zueinander liegen und um ihre Achsen gegensinnig drehbar sind, wobei der Prüfdorn (l5) oder die Anpreßrolle (l8) angetrieben ist und die Dichtung (l4) reibschlüssig mitnimmt.

8. Gerät nach einem der Ansprüche 3 bis 6,
dadurch gekennzeichnet, daß das als Andrückband (l8A) ausgeführte Andrückglied als endloses Band ausgebildet und über zwei zum Prüfdorn (l5) achsparallele Umlenkrollen (36 und 37) geführt ist, derart, daß das der Dichtung (l4) zugekehrte Trum des Andrückbandes (l8A) aus seinem geradlinigen Verlauf von der Mantelfläche der Dichtung (l4) ausgelenkt und damit gespannt wird.

9. Gerät nach Anspruch 8,
dadurch gekennzeichnet, daß das Andrückband (l8A), vorzugsweise durch eine der beiden Umlenkrollen (36; 37) angetrieben und der Prüfdorn (l5) frei drehbar gelagert ist.

l0. Verfahren zum Prüfen der Dichtkante einer Dichtlippe unter Verwendung eines mit einem Prüfdorn versehenen Gerätes insbesondere nach einem der Ansprüche l bis 9, bei dem die auf dem Prüfdorn angeordnete ringförmige Dichtung umlaufend angetrieben und die Dichtkante von einem Lichtstrahl abgetastet wird, dadurch gekennzeichnet, daß der Prüfdorn (l5) mit Spiel innerhalb der ringförmigen Dichtung (l4) angeordnet wird, und daß die Dichtlippe (30) während der anschließenden Drehung der Dichtung (l4) fortlaufend mit aufeinanderfolgenden Teilabschnitten ihres Umfanges mit definierter Kraft gegen den Prüfdorn (l5) gedrückt wird.

FIG. 1

FIG.2

FIG.3